# EUROPÄISCHE PATENTSCHRIFT

(11) **EP 1 686 220 B1**
(45) Veröffentlichungstag und Bekanntmachung des Hinweises auf die Patenterteilung: **04.05.2011**
(21) Anmeldenummer: 06001751.4
(22) Anmeldetag: 27.01.2006
(51) Int. Cl.: E04C 2/06

(54) **Leichtbauplatte**
Lightweight construction panel
Panneau léger de construction

(30) Priorität: 28.01.2005 DE 102005004148
(43) Veröffentlichungstag der Anmeldung: 02.08.2006
(73) Patentinhaber: Fermacell GmbH, 47119 Duisburg (DE)
(72) Erfinder: Vogel, Dirk, Dr., 30627 Hannover (DE); Otterbein, Stephan, 04668 Neunitz (DE)
(74) Vertreter: Patentanwälte Dr. Solf & Zapf

(56) Entgegenhaltungen:
- EP-A- 0 935 032
- DE-A- 3 840 377
- US-A- 3 284 980
- US-A1- 2002 170 648

## Beschreibung

Die Erfindung betrifft eine mehrschichtige Leichtbauplatte auf Zementbasis aus einer Kernschicht und mindestens einer Deckschicht, insbesondere zur Verwendung in feuchter Umgebung.

Ein generelles Problem bei der Verwendung von zementhaltigen Leichtbauplatten unter feuchten Umgebungsbedingungen ist die hohe kapillare Wasseraufnahme aufgrund der während des hydraulischen Abbindeprozesses entstehenden Kapillarkanäle und kapillaren Öffnungen in der Zementsteinmatrix. Diese Wasseraufnahme führt zum Quellen der Platten und zu Dehnungsrissen des zementhaltigen Materials und damit einhergehend zu Festigkeitsverlusten und zum Abplatzen bis zur Zerstörung des auf der Leichtbauplatte befestigten Belages, wie z.B. eines aufgebrachten Fliesenbelages. Außerdem ist die Frostbeständigkeit solcher zementhaltigen Leichtbauplatten sehr gering.

Problematisch bei der Produktion zementhaltiger Leichtbauplatten ist außerdem die Entstehung von Schwindrissen in der Zementsteinmatrix. Diese resultieren daraus, dass ein Teil des Anmachwassers in die Matrix aufgenommen aber nicht chemisch gebunden wird. Beim Verdunsten dieses nicht gebundenen Kapillarwassers aus dem bereits erhärteten Produkt und der daraus resultierenden Spannungen können sich Risse (Schwindrisse) ergeben, wenn die Schwindspannungen größer als die Zugfestigkeiten der Zementmatrix sind. Durch diese Schwindrisse kann die kapillare Wasseraufnahme der Zementsteinmatrix zusätzlich erhöht werden.

Um eine zementhaltige Leichtbauplatte dennoch in feuchter Umgebung verwenden zu können, sind mehrere Lösungen bekannt.

Eine aus der DE 197 04 961 C2 bekannte Leichtbauplatte besteht aus einer Kernschicht aus einem Leichtbeton, die beiderseits mit einer Deckschicht, in die unterschiedlich lange, alkaliresistente textile Glasfasern eingebracht sind, belegt ist. In die Kernschicht sind als Leichtzuschlagstoff geblähte Tonperlen aus gebrannten Blähtongranalien und als Bewehrung alkaliresistente Fasern, beispielsweise Glas- und/oder Synthetikfasern eingebracht, wodurch der Verbund zwischen Deck- und Kernschicht verbessert wird. Die Tonperlen in der Kernschicht verringern aufgrund ihres geschlossenporigen Aufbaus die Wasseraufnahmefähigkeit der Leichtbauplatte.

Aus der US 3,284,980 ist eine mehrschichtige Leichtbauplatte zur Verwendung besonders in feuchter Umgebung bekannt, die aus einer Kernschicht aus Beton, vorzugsweise Leichtbeton, bestehend aus hydratisiertem Zement und Zuschlägen, und zwei auf den beiden Hauptflächen der Kernschicht angeordneten, im Vergleich zu dieser wesentlich dünneren, Deckschichten ebenfalls auf Zementbasis mit einem integriertem Armierungsgewebe, beispielsweise mit einem alkaliresistent beschichteten Glasfasergewebe besteht, das die Wasseraufnahme der Kernschicht verringert. Als Zuschläge für die relativ leichte und poröse Kernschicht werden beispielsweise Perlit, Vermiculit, Blähschlacke oder Blähschiefer verwendet, bevorzugt im Verhältnis 2:1 zum Volumen des Zementanteils. Die Deckschicht kann in geringem Maße feine Zusatzstoffe wie z.B. Sand oder feine Blähschlacke enthalten. Aufgrund ihrer Wetterfestigkeit wird die Leichtbauplatte gemäß der US 3,284,98 beim Bau von Mauern und Schwimmbädern eingesetzt. Allerdings ist die Wasseraufnahme einer derartigen Leichtbauplatte mit ca. 10 Gew.-% immer noch relativ hoch.

In der EP 0 935 032 A2 wird eine mehrschichtige Leichtbauplatte auf Zementbasis beschrieben, die ebenfalls aus einer Kernschicht aus hydratisiertem Zement und Leichtzuschlägen und zwei auf den beiden Hauptflächen der Kernschicht angeordneten, im Vergleich zu dieser wesentlich dünneren, Deckschichten auf Zementbasis mit integriertem Armierungsgewebe besteht, wobei zumindest die Zementanteile der Kernschicht durch Zugabe von geeigneten Hydrophobierungsmitteln hydrophobiert sind, so dass die kapillare Wasseraufnahme der Leichtbauplatte innerhalb von 24 h unter 1 kg/m² liegt. Als Hydrophobierungsmittel haben sich gemäß der EP 0 935 032 A2 Metallstearate, insbesondere Zink-, Calcium- und/oder Aluminiumstearate, und Oleate, insbesondere Natriumoleate, als besonders geeignet erwiesen, da diese in chemische Wechselwirkungen mit dem Zementanteil treten und beispielsweise zur Bildung von Metallseifen führen. Der Anteil der Hydrophobierungsmittel bezogen auf den zu hydrophobierenden festen Anteil der Kernschicht beträgt dabei weniger als 1 Gew.-%. Eine besonders wirksame Verteilung der Hydrophobierungsmittel in der Zementmatrix wird außerdem laut der EP 0 935 032 A2 bei einem relativ geringen Wasseranteil in der Kernschicht erreicht. Als Zuschläge werden Leichtzuschläge wie Perlit, Vermiculit, insbesondere in geblähter Form wie Blähschiefer, Schaumglas oder gebrochener Blähton verwendet, die ebenfalls hydrophobiert werden können, um die Wasseraufnahme der Leichtbauplatte noch weiter zu verringern. Außerdem kann der Zementanteil der beiden auf den Hauptflächen der Kernschicht der Leichtbauplatte angeordneten Deckschichten ebenfalls hydrophobiert sein. Das Armierungsgewebe der Deckschichten ist beispielsweise ein Glasfasergewebe, das mit einer alkaliresistenten Beschichtung, z.B. aus Kunststoff, versehen ist.

Des weiteren ist aus einem Prospekt "AESTUVER Die universelle Brandschutzplatte" der Firma Aestuver vom November 1994 eine mehrschichtige Brandschutzplatte aus Leichtbeton bekannt, die als Zuschlag Blähglas in Form von Mikro-Glashohlkugeln und Glasfasern im Matrixaufbau aufweist. Diese Platte soll eine geringe Wasseraufnahmefähigkeit besitzen.

Bei den beschriebenen mehrschichtigen Leichtbauplatten ist zwar die Wasseraufnahme im Vergleich zu herkömmlichen Leichtbauplatten auf Zementbasis geringer, allerdings ist die kapillare Wasseraufnahme insbesondere in der Deckschicht immer noch relativ hoch, so dass das Wasser durch die Deckschicht an die Kernschicht vordringen kann.

Durch die in der EP 0 935 032 A2 vorgeschlagene Hydrophobierung zumindest des zementhaltigen Anteils der Kernschicht kann zwar die Wasseraufnahme der Kernschicht deutlich verringert werden, allerdings ist dieses Verfahren relativ kostenintensiv, da verhältnismäßig viel Hydrophobierungsmittel benötigt wird.

Aufgrund des hohen Zementsteinanteils in der Deckschicht können außerdem Schwindrisse in der Deckschicht auftreten, die zum einen zu einer Erhöhung der Wasseraufnahme führen und zum anderen die Verbindung des Zementsteins mit dem Armierungsgewebe beeinträchtigen können, so dass der Verbund des Armierungsgewebe mit der Zementsteinmatrix gestört wird und die Festigkeit der Leichtbauplatte sinken kann. Auch die auf die Deckschicht aufgebrachten Beläge können aufgrund der Schwindrisse abplatzen.

Insbesondere aber kann der unterschiedliche Matrixaufbau der Kernschicht und der Deckschicht aufgrund der unterschiedlichen physikalischen und chemischen Eigenschaften, insbesondere der unterschiedlichen E-Moduli und Festigkeitseigenschaften dazu führen, dass der Verbund der beiden Schichten vor allem unter Belastung, insbesondere bei Temperaturschwankungen, und bei Feuchteeinfluss durch die zwischen den Schichten auftretenden Spannungen beeinträchtigt werden kann.

Die US 2002/0170648 A1 offenbart eine gattungsgemäße Leichtbauplatte mit einer Kernschicht und einer Deckschicht sowie einer Armierungsmatte, wobei die Kernschicht Leichtzuschlagstoffe aufweisen kann. Bei diesen Leichtzuschlagstoffen kann es sich um Glaskugeln handeln. Die Deckschicht kann feine Zuschlagsstoffe und/oder Füllstoffe enthalten. Die Deckschicht dient als Klebeschicht, um die Armierungsmatte an der Kernschicht zu befestigen.

Aus der DE 38 40 377 A1 geht eine gattungsgemäße Leichtbauplatte mit einer Mittelsschicht und zwei Deckschichten sowie jeweils einer in die Deckschichten integrierten Armierungsmatte hervor. Die Mittelschicht der Platte kann einen Füllstoff wie z.B. Sand und/oder Flugasche und/oder Perlite und/oder Vermiculit und/oder Styropor oder dergleichen enthalten.

Die Aufgabe der vorliegenden Erfindung ist, eine mehrschichtige Leichtbauplatte auf Zementbasis derart weiterzuentwickeln, dass die Wasseraufnahme der Leichtbauplatte auch schon ohne Hydrophobierung des Zementsteinanteils der Leichtbauplatte deutlich verringert wird, so dass Dehnungsrisse und das Abplatzen des Belages vermieden werden. Außerdem soll bei gleichzeitig möglichst geringem Gewicht der Leichtbauplatte die Verankerung des Armierungsgewebes in der Deckschicht und die Verbindung der Kernschicht mit der Deckschicht verbessert werden. Zudem sollen die Oberflächen möglichst abriebfest sein und problemlos Putz auf diese aufgetragen werden.

Diese Aufgaben werden durch die Merkmale des Anspruchs 1 gelöst. Vorteilhafte Weiterbildungen der Erfindung werden in den Unteransprüchen gekennzeichnet.

Die erfindungsgemäße mehrschichtige Leichtbauplatte weist eine Kernschicht und mindestens eine, vorzugsweise zwei Deckschichten auf, die an einer bzw. an den Hauptoberflächen der Kernschicht angeordnet ist bzw. sind, und die Kernschicht abdecken. Im Verhältnis zur Kernschicht sind die Deckschichten außerdem deutlich dünner ausgebildet.

Der Kerngedanke der Erfindung besteht im wesentlichen darin, die Deckschicht mit mechanisch/physikalischen Mitteln derart zu verändern, dass sie widerstandsfähiger gegen Wasseraufnahme ist. Dies wird erfindungsgemäß dadurch erreicht, dass die Deckschicht eine Festmörtelmatrix aus Zementstein und mindestens einen geschlossenzellig und/oder geschlossenporig ausgebildeten Leichtzuschlagstoff aufweist, in die mindestens ein Armierungsgewebe aus vorzugsweise wasserundurchlässigen Fasern eingebettet ist.

Geschlossenzellig im Sinne der Erfindung meint geblähte Körper mit einer geschlossenen Außenoberfläche. Geschlossenporig ist ein Körper, der geschlossene Blähporen aufweist.

Bei dem geschlossenzellig aufgebauten Leichtzuschlagstoff handelt es sich erfindungsgemäß um ungebrochenes Blähglasgranulat in Form von Mikro-Glashohlkugeln oder Blähglasperlen. Bei dem geschlossenporigen Leichtzuschlagstoff handelt es sich erfindungsgemäß um gebrochenes oder ungebrochenes Blähtongranulat in Form von Blähtonperlen oder Blähtonkörnern aus gebrannten Tongranalien.

Der verwendete Leichtzuschlagstoff weist dabei vorzugsweise eine Korngröße von 0 bis 2 mm, bevorzugt von 0,5 bis 1 mm auf.

Das in die Festmörtelmatrix integrierte Armierungsgewebe ist vorzugsweise ein Glasfasergewebe, bevorzugt aus E-Glas oder AR-Glas, das zweckmäßigerweise mit einer alkaliresistenten Beschichtung versehen ist, oder aber ein Gewebe aus Kunststoff mit einer Maschenweite von vorzugsweise 2 bis 8 mm, bevorzugt 4 bis 6,5 mm, und Multifilamenten mit einer Breite von vorzugsweise 0,5 bis 1,5 mm, bevorzugt 0,6 bis 0,7 mm und einer Dicke von vorzugsweise 0,1 bis 0,5 mm, bevorzugt 0,15 bis 0,3 mm oder Monofilamenten mit einem Durchmesser von vorzugsweise 0,1 bis 0,5 mm, bevorzugt 0,15 bis 0,3 mm. Dabei ist ein Armierungsgewebe im Sinne der Erfindung allgemein ein textiles Flächengebilde mit gitterartigen und/oder gitterähnlichen Öffnungen, beispielsweise ein Vliesstoff, z.B. ein Spinnvlies und/oder allgemein beispielsweise ein Netz, Geflecht, Gestricke, oder Gewirke.

Zweckmäßigerweise enthält die Deckschicht außerdem weitere übliche Zusatzstoffe wie Puzzolane, beispielsweise Flugasche, insbesondere Steinkohlenflugasche und/oder Hüttensand und/oder Mikrosilika sowie Luftporen, beispielsweise von 5 bis 20 Vol.-%, bevorzugt von 8 bis 15 Vol.-%, die durch die Verwendung von Luftporenbildnern entstehen. Als Zement wird zweckmäßigerweise Portlandzement verwendet.

Im Folgenden werden bevorzugte Zusammensetzungen von erfindungsgemäßen Deckschichten angegeben:

| **Rohstoff** | **[Gew.-%]** | |
|---|---|---|
| | | **insbesondere** |
| Portlandzementstein | 30-60 | 40-50 |
| Puzzolan | 0-50 | 30-40 |
| Blähglasgranulat | 5-30 | 10-20 |
| Gewebe | 0,5-3 | 0,5-1 |

Die Summe aus dem Anteil an geschlossenzelligem und/oder geschlossenporigem Leichtzuschlagstoff, insbesondere an Blähglasgranulat und dem Gewebeanteil in den Deckschichten beträgt vorzugsweise 8 bis 20 Gew.-%, bevorzugt 10 bis 15 Gew.-%.

Die Kernschicht der erfindungsgemäßen Leichtbauplatte besteht im wesentlichen aus Zementstein, zweckmäßigerweise Portlandzementstein und mindestens einem, insbesondere einem geschlossenzelligen und/oder geschlossenporigen Leichtzuschlag, wobei für die Kernschicht insbesondere ungebrochene Blähtonperlen und/oder Blähtonkörner mit einer Korngröße von vorzugsweise 0 bis 4 mm, bevorzugt von 0 bis 2 mm und der folgenden Kornverteilung verwendet werden.

| **Korngröße** | **Kornverteilung** | |
|---|---|---|
| | | **insbesondere** |
| **[mm]** | **[Gew.-%]** | |
| 0,000 bis 0,125 | 0-0,5 | 0-0,4 |
| 0,125 bis 0,250 | 0-0,5 | 0-0,4 |
| 0,250 bis 0,500 | 0-2,5 | 0-2 |
| 0,500 bis 1,000 | 5-17 | 7-15 |
| 1,000 bis 2,000 | 50-70 | 55-66 |
| 2,000 bis 2,500 | 10-35 | 15-30 |

Des weiteren enthält die Kernschicht zweckmäßigerweise übliche Zusatzstoffe wie Puzzolane, beispielsweise Flugasche, insbesondere Steinkohlenflugasche und/oder Hüttensand und/oder Mikrosilika und Luftporen, beispielsweise im Bereich von 10 bis 30 Vol.-%, bevorzugt von 15 bis 25 Vol.-%, die aus der Verwendung von Luftporenbildnern resultieren.

Im Folgenden werden bevorzugte Zusammensetzungen von Kernschichten der erfindungsgemäßen Leichtbauplatte angegeben.

| **Rohstoff** | **[Gew.-%]** | |
|---|---|---|
| | | **insbesondere** |
| Portlandzementstein | 20-40 | 25-35 |
| Puzzolan | 0-40 | 20-30 |
| Blähtongranulat | 30-60 | 40-50 |

Der Anteil an geschlossenzelligem und/oder geschlossenporigem Leichtzuschlagstoff, insbesondere an Blähtongranulat in der Kernschicht beträgt vorzugsweise 40 bis 60 Gew.-%, bevorzugt 45 bis 55 Gew.-%.

Des weiteren können sowohl die Kernschicht als auch die Deckschicht zusätzlich hydrophobiert sein, vorzugsweise mit Hydrophobierungsmittel auf Silikonöl- oder Silan-/ Siloxanbasis, wobei insbesondere jeweils die Zuschlagstoffe, vor allem die geschlossenzelligen und/oder geschlossenporigen Zuschlagstoffe wie das Blähglasgranulat und/oder das Blähtongranulat vor dem Mischen mit dem Zementanteil und gegebenenfalls den Zusatzmitteln und Zusatzstoffen hydrophobiert werden. Zweckmäßigerweise beträgt der Anteil an Hydrophobierungsmittel in der Deckschicht 0,1 bis 0,7 Gew.-%, bevorzugt 0,3 bis 0,5 Gew.-% und in der Kernschicht 0,1 bis 0,6 Gew.-%, bevorzugt 0,3 bis 0,4 Gew.-%.

Im Folgenden wird die Erfindung anhand der Zeichnung beispielhaft näher erläutert.

Es zeigt:

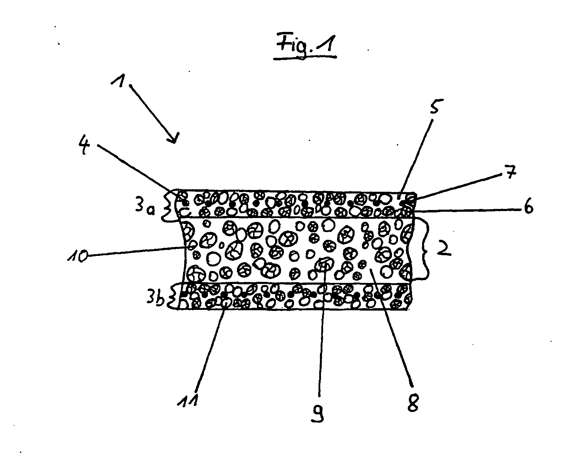

Fig.1: Schematisch einen Querschnitt durch einen Teil einer erfindungsgemäßen Leichtbauplatte

Eine erfindungsgemäße Leichtbauplatte 1 gemäß Fig.1 weist eine Kernschicht 2 auf, die beidseitig mit je einer Deckschicht 3a;3b abgedeckt ist. Die Deckschichten 3a;3b weisen jeweils eine Matrix aus Zementstein 5 und ungebrochenem Blähglasgranulat 6 und ein in die Matrix integriertes Armierungsgewebe 7 mit Kettfäden 4 und nicht dargestellten Schussfäden auf. Die Kernschicht 2 weist eine Matrix aus Zementstein 8 und in den Zementstein 8 eingebetteten ungebrochenen Blähtongranulaten 9 auf. Des weiteren weisen sowohl die Deckschichten 3a;3b als auch die Kernschicht 2 Luftporen 10;11 auf.

Zweckmäßigerweise weisen die Deckschichten 3a;3b eine Dicke von 1 bis 3 mm, bevorzugt von 1,3 bis 2 mm und die Kernschicht eine Dicke von 6 bis 12 mm, bevorzugt von 8 bis 10 mm auf.

Die Rohdichte der erfindungsgemäßen Leichtbauplatte liegt vorzugsweise zwischen 850 und 1200 kg/m³, bevorzugt zwischen 950 und 1050 kg/m³.

Durch den Aufbau der erfindungsgemäßen Leichtbauplatte mit dem hohen Gewebeanteil aus wasserundurchlässigen Fasern, insbesondere dem hohen Glasfasergewebeanteil und dem geschlossenzelligen Blähglasgranulat in der Deckschicht erhält man eine Leichtbauplatte, deren Wasseraufnahmefähigkeit bzw. -kapazität auch ohne Zusatz von Hydrophobierungsmittel ausreichend gering ist, insbesondere weil sowohl das Gewebe als auch das geschlossenzellige Blähglasgranulat kein Wasser aufnehmen.

Somit wird weitgehend physikalisch verhindert, dass Wasser durch die Deckschicht an die Kernschicht dringt, so dass ein Quellen der Leichtbauplatte und die damit verbundenen Dehnungsrisse und das Abplatzen des Belages verhindert werden können.

Zudem lässt der hohe Anteil an Glasfasergewebe und Blähglasgranulat in der Deckschicht einen geringen Wasser/Feststoffwert w/f bei der Produktion zu, woraus resultiert, dass Schwindrisse insbesondere in der Deckschicht nahezu vollständig vermieden werden können.

Der Zement und das Blähglasgranulat in der Deckschicht bilden eine Festmörtelmatrix, in der das Armierungsgewebe fest bzw. innig eingebettet und verankert ist, so dass ein fester Verbund gebildet wird, der auch unter Belastung und Feuchteeinfluss bestehen bleibt.

Die erfindungsgemäße Leichtbauplatte weist einen relativ homogenen, fast monolithischen Matrixaufbau mit entsprechend homogenen geringen E-Moduli auf, wodurch unter Belastung und Feuchteeinfluss zwischen der Kernschicht und den Deckschichten auftretende Spannungen im Gefüge ohne Rissbildung abgebaut werden können.

Außerdem kann die Wasseraufnahmefähigkeit der Leichtbauplatte zusätzlich durch die Verwendung des geschlossenzelligen und/oder geschlossenporigen Blähtongranulats in der Kernschicht, das insbesondere im Vergleich zu üblichen offenporigen Leichtzuschlägen kaum Wasser aufnimmt, verringert werden.

Des weiteren weisen beide Oberflächen der Deckschichten insbesondere aufgrund des geschlossenzelligen Leichtzuschlags keine sichtbaren Poren auf und sind relativ ebenflächig.

Die Oberflächen sind dadurch außerdem relativ abriebfest. Auch ein dünner Putz kann problemlos und relieffrei auf diese Oberflächen aufgetragen werden.

## Patentansprüche

1. Mehrschichtige Leichtbauplatte (1) auf Zementbasis, insbesondere zur Verwendung in feuchter Umgebung, mit einer Kernschicht (2), die hydratisierten Zementstein (8) und mindestens einen Leichtzuschlagstoff (9) aufweist, und mit mindestens einer an mindestens einer Hauptoberfläche der Kernschicht (2) angeordneten Deckschicht (3a,3b), die eine Festmörtelmatrix aus hydratisiertem Zementstein (5) und mindestens einem geschlossenzelligen und/oder geschlossenporigen, insbesondere ungebrochenen Leichtzuschlagstoff (6) aufweist, in die mindestens ein Armierungsmittel insbesondere ein Armierungsgewebe (7) aus vorzugsweise wasserundurchlässigen Fasern und/oder Faseranordnungen eingebettet ist, wobei
die Deckschicht (3a,3b) als Leichtzuschlagstoff geschlossenzelliges, ungebrochenes Blähglasgranulat in Form von Mikro-Glashohlkugeln und/oder Blähglasperlen und /oder
geschlossenporiges, ungebrochenes Blähtongranulat in Form von Blähtonperlen und/oder Blähtonkörnern aus gebrannten Blähtongranalien aufweist.

2. Leichtbauplatte nach Anspruch 1,
**dadurch gekennzeichnet, dass**
das Blähglasgranulat eine Korngröße von 0 bis 2 mm, bevorzugt von 0,5 bis 1 mm aufweist.

3. Leichtbauplatte nach Anspruch 1 oder 2,
**dadurch gekennzeichnet, dass**
das Armierungsgewebe (7) ein Glasfasergewebe, bevorzugt aus E-Glas und/oder AR-Glas, oder ein Gewebe aus Kunststoff ist.

4. Leichtbauplatte nach einem oder mehreren der vorhergehenden Ansprüche,
**dadurch gekennzeichnet, dass**
das Armierungsgewebe (7) mit einer alkaliresistenten Beschichtung versehen ist.

5. Leichtbauplatte nach einem oder mehreren der vorhergehenden Ansprüche,
**dadurch gekennzeichnet, dass**
das Armierungsgewebe (7) eine Maschenweite von 2 bis 8 mm, bevorzugt 4 bis 6,5 mm aufweist.

6. Leichtbauplatte nach einem oder mehreren der vorhergehenden Ansprüche,
**dadurch gekennzeichnet, dass**
das Armierungsgewebe (7) Multifilamente mit einer Breite von 0,5 bis 1,5 mm, bevorzugt 0,6 bis 0,7 mm und einer Dicke von 0,1 bis 0,5 mm, bevorzugt 0,15 bis 0,3 mm aufweist.

7. Leichtbauplatte nach einem oder mehreren der Ansprüche 1 bis 5,
**dadurch gekennzeichnet, dass**
das Armierungsgewebe (7) Monofilamente mit einem Durchmesser von 0,1 bis 0,5 mm, bevorzugt 0,15 bis 0,3 mm aufweist.

8. Leichtbauplatte nach einem oder mehreren der vorhergehenden Ansprüche,
**dadurch gekennzeichnet, dass**
die Summe aus dem Anteil an geschlossenzelligem und/oder geschlossenporigem Leichtzuschlagstoff (6), insbesondere an Blähglasgranulat, und dem Gewebeanteil in der erhärteten Deckschicht (3a,3b) 8 bis 20 Gew.-%, bevorzugt 10 bis 15 Gew.-% beträgt.

9. Leichtbauplatte nach einem oder mehreren der vorhergehenden Ansprüche,
**dadurch gekennzeichnet, dass**
die Kernschicht (2) mindestens einen geschlossenzelligen und/oder geschlossenporigen, insbesondere ungebrochenen Leichtzuschlagstoff (9) aufweist.

10. Leichtbauplatte nach Anspruch 9,
**dadurch gekennzeichnet, dass**
die Kernschicht (2) als geschlossenporig aufgebauten Leichtzuschlagstoff (9) ungebrochenes Blähtongranulat, insbesondere Blähtonperlen und/oder Blähtonkörner aus gebrannten Tongranalien aufweist.

11. Leichtbauplatte nach Anspruch 10,
**dadurch gekennzeichnet, dass**
das Blähtongranulat der Kernschicht (2) eine Korngröße von 0 bis 4 mm, bevorzugt von 0 bis 2 mm aufweist.

12. Leichtbauplatte nach Anspruch 10 oder 11,
**dadurch gekennzeichnet, dass**
das Blähtongranulat der Kernschicht (2) folgende Kornverteilung aufweist:
| **Korngröße** | **Kornverteilung** | |
|---|---|---|
| | | **insbesondere** |
| **[mm]** | **[Gew. -%]** | |
| 0,000 bis 0,125 | 0-0,5 | 0-0,4 |
| 0,125 bis 0,250 | 0-0,5 | 0-0,4 |
| 0,250 bis 0,500 | 0-2,5 | 0-2 |
| 0,500 bis 1,000 | 5-17 | 7-15 |
| 1,000 bis 2,000 | 50-70 | 55-66 |
| 2,000 bis 2,500 | 10-35 | 15-30 |

13. Leichtbauplatte nach einem oder mehreren der Ansprüche 9 bis 12,
**dadurch gekennzeichnet, dass**
der Anteil an geschlossenzelligem und/oder geschlossenporigem Leichtzuschlagstoff (9), insbesondere an Blähtongranulat in der erhärteten Kernschicht (2) 40 bis 60 Gew.-%, bevorzugt 45 bis 55 Gew.-% beträgt.

14. Leichtbauplatte nach einem oder mehreren der vorhergehenden Ansprüche,
**dadurch gekennzeichnet, dass**
die Kernschicht (2) und/oder die Deckschicht (3a,3b) hydrophobiert sind.

15. Leichtbauplatte nach Anspruch 14,
**dadurch gekennzeichnet, dass**
jeweils der oder die Zuschlagstoffe der Kernschicht (2) und/oder der Deckschicht (3a,3b), insbesondere der oder die geschlossenzelligen und/oder geschlossenporigen Leichtzuschlagstoffe (6,9) hydrophobiert sind.

16. Leichtbauplatte nach Anspruch 14 oder 15,
**dadurch gekennzeichnet, dass**
die Kernschicht und/oder die Deckschicht (3a,3b) mit Hydrophobierungsmitteln auf Silikonölbasis und/oder Silan-/ Siloxanbasis hydrophobiert sind.

17. Leichtbauplatte nach einem oder mehreren der Ansprüche 14 bis 16,
**dadurch gekennzeichnet, dass**
der Anteil der Hydrophobierungsmittel in der Deckschicht (3a,3b) 0,1 bis 0,7 Gew.-%, bevorzugt 0,3 bis 0,5 Gew.-% beträgt.

18. Leichtbauplatte nach einem oder mehreren der Ansprüche 14 bis 17,
**dadurch gekennzeichnet, dass**
der Anteil der Hydrophobierungsmittel in der Kernschicht (2) 0,1 bis 0,5 Gew.-%, bevorzugt von 0,3 bis 0,4 Gew.-% beträgt.

19. Leichtbauplatte nach einem oder mehreren der vorhergehenden Ansprüche,
**dadurch gekennzeichnet, dass**
die Deckschicht (3a,3b) eine Dicke von 1 bis 3 mm, bevorzugt von 1,3 bis 2 mm und die Kernschicht (2) eine Dicke von 6 bis 12 mm, bevorzugt von 8 bis 10 mm aufweist.

20. Leichtbauplatte nach einem oder mehreren der vorhergehenden Ansprüche,
**dadurch gekennzeichnet, dass**
die Rohdichte der Leichtbauplatte (1) 850 bis 1200 kg/m³, bevorzugt 950 bis 1050 kg/m³ beträgt.

21. Leichtbauplatte nach einem oder mehreren der vorhergehenden Ansprüche,
**dadurch gekennzeichnet, dass**
die Deckschichten (3a,3b) Zusatzstoffe wie Puzzolane, beispielsweise Flugasche, insbesondere Steinkohlenflugasche und/oder Hüttensand und/oder Mikrosilika enthalten.

22. Leichtbauplatte nach einem oder mehreren der vorhergehenden Ansprüche,
**dadurch gekennzeichnet, dass**
bevorzugte Zusammensetzungen der Deckschichten (3a,3b) wie folgt sind:
| **Rohstoff** | **[Gew. -%]** | |
|---|---|---|
| | | **insbesondere** |
| Portlandzementstein | 30-60 | 40-50 |
| Puzzolan | 0-50 | 30-40 |
| Blähglasgranulat | 5-30 | 10-20 |
| Gewebe | 0,5-3 | 0,5-1 |

23. Leichtbauplatte nach einem oder mehreren der vorhergehenden Ansprüche,
**dadurch gekennzeichnet, dass**
die Kernschicht (2) übliche Zusatzstoffe wie Puzzolane, beispielsweise Flugasche, insbesondere Steinkohlenflugasche und/oder Hüttensand und/oder Mikrosilika enthält.

24. Leichtbauplatte nach einem oder mehreren der vorhergehenden Ansprüche,
**dadurch gekennzeichnet, dass**
bevorzugte Zusammensetzungen von Kernschichten (2) wie folgt sind:
| **Rohstoff** | **[Gew.-%]** | |
|---|---|---|
| | | **insbesondere** |
| Portlandzementstein | 20-40 | 25-35 |
| Puzzolan | 0-40 | 20-30 |
| Blähtongranulat | 30-60 | 40-50 |

25. Leichtbauplatte nach einem oder mehreren der vorhergehenden Ansprüche,
**dadurch gekennzeichnet, dass**
die Deckschicht (3a,3b) 5 bis 20 Vol.-%, bevorzugt 8 bis 15 Vol.-% Luftporen (11) aufweist, die aus der Verwendung von Luftporenbildnern resultieren.

26. Leichtbauplatte nach einem oder mehreren der vorhergehenden Ansprüche,
**dadurch gekennzeichnet, dass**
die Kernschicht (2) 10 bis 30 Vol.-%, bevorzugt 15 bis 25 Vol-% Luftporen (10) aufweist, die aus der Verwendung von Luftporenbildnern resultieren.

## Claims

1. Multilayer, cement-based lightweight building board (1), in particular for use in a moist environment, with a core layer (2), comprising hydrated hardened cement paste (8) and at least one lightweight aggregate (9), and with at least one covering layer (3a,3b), arranged on at least one main surface of the core layer (2) and comprising a hardened-mortar matrix made of hydrated hardened cement paste (5) and of at least one closed-cell and/or closed-pore, in particular unbroken lightweight aggregate (6), in which matrix at least one reinforcing means, in particular a reinforcing fabric (7) made preferably of water-impermeable fibres and/or fibre arrangements is embedded,
the covering layer (3a,3b) comprising, as the lightweight aggregate, closed-cell, unbroken expanded-glass granulate in the form of hollow glass microspheres and/or expanded-glass beads
and/or
closed-pore, unbroken expanded-clay granulate in the form of expanded-clay beads and/or expanded-clay pellets made from fired expanded-clay granules.

2. Lightweight building board according to Claim 1,
**characterised in that**
the expanded-glass granulate has a particle size of 0 to 2 mm, preferably of 0.5 to 1 mm.

3. Lightweight building board according to Claim 1 or 2,
**characterised in that**
the reinforcing fabric (7) is a glass-fibre fabric, preferably made of E-glass and/or AR-glass, or a fabric made of plastics material.

4. Lightweight building board according to one or more of the preceding claims,
**characterised in that**
the reinforcing fabric (7) is provided with an alkali-resistant coating.

5. Lightweight building board according to one or more of the preceding claims,
**characterised in that**
the reinforcing fabric (7) has a mesh size of 2 to 8 mm, preferably 4 to 6.5 mm.

6. Lightweight building board according to one or more of the preceding claims,
**characterised in that**
the reinforcing fabric (7) has multifilaments with a width of 0.5 to 1.5 mm, preferably 0.6 to 0.7 mm and a thickness of 0.1 to 0.5 mm, preferably 0.15 to 0.3 mm.

7. Lightweight building board according to one or more of Claims 1 to 5,
**characterised in that**
the reinforcing fabric (7) has monofilaments with a diameter of 0.1 to 0.5 mm, preferably 0.15 to 0.3 mm.

8. Lightweight building board according to one or more of the preceding claims,
**characterised in that**
the sum of the proportion of closed-cell and/or closed-pore lightweight aggregate (6), in particular expanded-glass granules, and the proportion of fabric in the hardened covering layer (3a,3b) is 8 to 20% by weight, preferably 10 to 15% by weight.

9. Lightweight building board according to one or more of the preceding claims,
**characterised in that**
the core layer (2) comprises at least one closed-cell and/or closed-pore, in particular unbroken lightweight aggregate (9).

10. Lightweight building board according to Claim 9,
**characterised in that**
the core layer (2) comprises, as the lightweight aggregate (9) of closed-pore structure, unbroken expanded-clay granulate, in particular expanded-clay beads and/or expanded-clay pellets made from fired clay granules.

11. Lightweight building board according to Claim 10,
**characterised in that**
the expanded-clay granulate of the core layer (2) has a particle size of 0 to 4 mm, preferably of 0 to 2 mm.

12. Lightweight building board according to Claim 10 or 11,
**characterised in that**
the expanded-clay granulate of the core layer (2) has the following particle distribution:
| Particle size | Particle distribution | |
|---|---|---|
| [mm] | [% by weight] in particular | |
| 0.000 to 0.125 | 0-0.5 | 0-0.4 |
| 0.125 to 0.250 | 0-0.5 | 0-0.4 |
| 0.250 to 0.500 | 0-2.5 | 0-2 |
| 0.500 to 1.000 | 5-17 | 7-15 |
| 1.000 to 2.000 | 50-70 | 55-66 |
| 2.000 to 2.500 | 10-35 | 15-30 |

13. Lightweight building board according to one or more of Claims 9 to 12,
**characterised in that**
the proportion of closed-cell and/or closed-pore lightweight aggregate (9), in particular expanded-clay granulate, in the hardened core layer (2) is 40 to 60% by weight, preferably 45 to 55% by weight.

14. Lightweight building board according to one or more of the preceding claims,
**characterised in that**
the core layer (2) and/or the covering layer (3a,3b) are made water-repellent.

15. Lightweight building board according to Claim 14,
**characterised in that**
in each case the aggregate(s) of the core layer (2) and/or of the covering layer (3a,3b), in particular the closed-cell and/or closed-pore lightweight aggregate(s) (6,9), are made water-repellent.

16. Lightweight building board according to Claim 14 or 15,
**characterised in that**
the core layer and/or the covering layer (3a,3b) are made water-repellent with water-repellent agents based on silicone oil and/or silane/siloxane.

17. Lightweight building board according to one or more of Claims 14 to 16,
**characterised in that**
the proportion of the water-repellent agents in the covering layer (3a,3b) is 0.1 to 0.7% by weight, preferably 0.3 to 0.5% by weight.

18. Lightweight building board according to one or more of Claims 14 to 17,
**characterised in that**
the proportion of the water-repellent agents in the core layer (2) is 0.1 to 0.5% by weight, preferably 0.3 to 0.4% by weight.

19. Lightweight building board according to one or more of the preceding claims,
**characterised in that**
the covering layer (3a,3b) has a thickness of 1 to 3 mm, preferably of 1.3 to 2 mm, and the core layer (2) has a thickness of 6 to 12 mm, preferably of 8 to 10 mm.

20. Lightweight building board according to one or more of the preceding claims,
**characterised in that**
the bulk density of the lightweight building board (1) is 850 to 1200 kg/m³, preferably 950 to 1050 kg/m³.

21. Lightweight building board according to one or more of the preceding claims,
**characterised in that**
the covering layers (3a,3b) contain additives, such as pozzolans, for example fly ash, in particular coal fly ash and/or slag sand and/or microsilica.

22. Lightweight building board according to one or more of the preceding claims,
**characterised in that**
preferred compositions of the covering layers (3a,3b) are as follows:
| Raw material | [% by weight] | |
|---|---|---|
| | | in particular |
| Hardened Portland cement paste | 30-60 | 40-50 |
| Pozzolan | 0-50 | 30-40 |
| Expanded-glass granulate | 5-30 | 10-20 |
| Fabric | 0.5-3 | 0.5-1 |

23. Lightweight building board according to one or more of the preceding claims,
**characterised in that**
the core layer (2) contains customary additives, such as pozzolans, for example fly ash, in particular coal fly ash and/or slag sand and/or microsilica.

24. Lightweight building board according to one or more of the preceding claims,
**characterised in that**
preferred compositions of core layers (2) are as follows:
| Raw material | [% by weight] | |
|---|---|---|
| | | in particular |
| Hardened Portland | 20-40 | 25-35 |
| cement paste | | |
| Pozzolan | 0-40 | 20-30 |
| Expanded-clay | 30-60 | 40-50 |
| granulate | | |

25. Lightweight building board according to one or more of the preceding claims,
**characterised in that**
the covering layer (3a,3b) has 5 to 20% by volume, preferably 8 to 15% by volume, of air voids (11) which result from the use of air-entraining agents.

26. Lightweight building board according to one or more of the preceding claims,
**characterised in that**
the core layer (2) has 10 to 30% by volume, preferably 15 to 25% by volume, of air voids (10) which result from the use of air-entraining agents.

## Revendications

1. Panneau léger (1) multicouche à base de ciment, destiné en particulier à une utilisation dans un environnement humide, comprenant une couche centrale (2), qui présente de la pierre de ciment (8) hydratée et au moins un agrégat léger (9), et au moins une couche de recouvrement (3a, 3b) disposée sur au moins une surface principale de la couche centrale (2), qui présente une matrice en mortier durci à base de pierre de ciment (5) hydratée et au moins un agrégat léger (6) à cellules fermées et/ou à pores fermés, en particulier non cassé, matrice dans laquelle est noyé au moins un moyen d'armature, en particulier un tissu d'armature (7) à base de fibres et/ou d'agencements de fibres de préférence imperméables à l'eau,
la couche de recouvrement (3a, 3b) présentant comme agrégat léger du granulé de verre gonflé à cellules fermées, non cassé, sous forme de microsphères creuses en verre et/ou de perles de verre gonflé et/ou
du granulé d'argile expansée à pores fermés et non cassé sous forme de perles d'argile expansée et/ou de grains d'argile expansée à base de grenailles cuites d'argile expansée.

2. Panneau léger selon la revendication 1,
**caractérisé en ce que**
le granulé de verre gonflé présente une grosseur de grain de 0 à 2 mm, de préférence de 0,5 à 1 mm.

3. Panneau léger selon la revendication 1 ou 2,
**caractérisé en ce que**
le tissu d'armature (7) est un tissu de fibre de verre, de préférence à base de verre E et/ou de verre AR, ou un tissu à base de matière synthétique.

4. Panneau léger selon l'une quelconque ou plusieurs des revendications précédentes,
**caractérisé en ce que**
le tissu d'armature (7) est doté d'un revêtement résistant à l'alcali.

5. Panneau léger selon l'une quelconque ou plusieurs des revendications précédentes,
**caractérisé en ce que**
le tissu d'armature (7) présente une largeur de maille de 2 à 8 mm, de préférence de 4 à 6,5 mm.

6. Panneau léger selon l'une quelconque ou plusieurs des revendications précédentes,
**caractérisé en ce que**
le tissu d'armature (7) présente des multifilaments présentant une largeur de 0,5 à 1,5 mm, de préférence de 0,6 à 0,7 mm et une épaisseur de 0,1 à 0,5 mm, de préférence de 0,15 à 0,3 mm.

7. Panneau léger selon l'une quelconque ou plusieurs des revendications 1 à 5,
**caractérisé en ce que**
le tissu d'armature (7) présente des monofilaments présentant un diamètre de 0,1 à 0,5 mm, de préférence de 0,15 à 0,3 mm.

8. Panneau léger selon l'une quelconque ou plusieurs des revendications précédentes,
**caractérisé en ce que**
la somme de la fraction d'agrégat léger (6) à cellules fermées et/ou à pores fermés, en particulier de granulé de verre gonflé, et de la fraction de tissu dans la couche de recouvrement (3a, 3b) durcie présente 8 à 20 % en poids, de préférence 10 à 15 % en poids.

9. Panneau léger selon l'une quelconque ou plusieurs des revendications précédentes,
**caractérisé en ce que**
la couche centrale (2) présente au moins un agrégat léger (9) à cellules fermées et/ou à pores fermés, en particulier non cassé.

10. Panneau léger selon la revendication 9,
**caractérisé en ce que**
la couche centrale (2) présente comme agrégat léger (9) conçu avec des pores fermés du granulé d'argile expansée non cassé, en particulier des perles d'argile expansée et/ou des grains d'argile expansée à base de grenailles d'argile cuites.

11. Panneau léger selon la revendication 10,
**caractérisé en ce que**
le granulé d'argile expansée de la couche centrale (2) présente une grosseur de grain de 0 à 4 mm, de préférence de 0 à 2 mm.

12. Panneau léger selon la revendication 10 ou 11,
**caractérisé en ce que**
le granulé d'argile expansée de la couche centrale (2) présente la répartition granulométrique suivante :
| Grosseur de grain | Répartition granulométrique | |
|---|---|---|
| [mm] | [% en poids] en particulier | |
| 0,000 à 0,125 | 0-0,5 | 0-0,4 |
| 0,125 à 0,250 | 0-0,5 | 0-0,4 |
| 0,250 à 0,500 | 0-2,5 | 0-2 |
| 0,500 à 1,000 | 5-17 | 7-15 |
| 1,000 à 2,000 | 50-70 | 55-66 |
| 2,000 à 2,500 | 10-35 | 15-30 |

13. Panneau léger selon l'une quelconque ou plusieurs des revendications 9 à 12,
**caractérisé en ce que**
la fraction d'agrégat léger (9) à cellules fermées et/ou à pores fermés, en particulier de granulé d'argile expansée dans la couche centrale (2) durcie présente 40 à 60 % en poids, de préférence 45 à 55 % en poids.

14. Panneau léger selon l'une quelconque ou plusieurs des revendications précédentes,
**caractérisé en ce que**
la couche centrale (2) et/ou la couche de recouvrement (3a, 3b) est/sont imperméabilisée(s).

15. Panneau léger selon la revendication 14,
**caractérisé en ce que**
à chaque fois l'agrégat ou les agrégats de la couche centrale (2) et/ou de la couche de recouvrement (3a, 3b), en particulier l'agrégat ou les agrégats légers (6, 9) à cellules fermées et/ou à pores fermés est/sont imperméabilisé(s).

16. Panneau léger selon la revendication 14 ou 15,
**caractérisé en ce que**
la couche centrale et/ou la couche de recouvrement (3a, 3b) est/sont imperméabilisée(s) avec des moyens d'imperméabilisation à base d'huile de silicone et/ou à base de silane/siloxane.

17. Panneau léger selon l'une quelconque ou plusieurs des revendications 14 à 16,
**caractérisé en ce que**
la fraction des moyens d'imperméabilisation dans la couche centrale (3a, 3b) représente 0,1 à 0,7 % en poids, de préférence 0,3 à 0,5 % en poids.

18. Panneau léger selon l'une quelconque ou plusieurs des revendications 14 à 17,
**caractérisé en ce que**
la fraction des moyens d'imperméabilisation dans la couche centrale (2) représente 0,1 à 0,5 % en poids, de préférence 0,3 à 0,4 % en poids.

19. Panneau léger selon l'une quelconque ou plusieurs des revendications précédentes,
**caractérisé en ce que**
la couche de recouvrement (3a, 3b) présente une épaisseur de 1 à 3 mm, de préférence de 1,3 à 2 mm et la couche centrale (2) une épaisseur de 6 à 12 mm, de préférence de 8 à 10 mm.

20. Panneau léger selon l'une quelconque ou plusieurs des revendications précédentes,
**caractérisé en ce que**
la densité brute du panneau léger (1) va de 850 à 1 200 kg/m³, de préférence de 950 à 1 050 kg/m³.

21. Panneau léger selon l'une quelconque ou plusieurs des revendications précédentes,
**caractérisé en ce que**
les couchés de recouvrement (3a, 3b) contiennent des adjuvants tels que pouzzolanes, par exemple cendre volante, en particulier cendre volante de houille et/ou sable sidérurgique et/ou microsilices.

22. Panneau léger selon l'une quelconque ou plusieurs des revendications précédentes,
**caractérisé en ce que**
des compositions préférées des couches de recouvrement (3a, 3b) sont les suivantes :
| Matière première | [% en poids] | |
|---|---|---|
| | | en particulier |
| Pierre de ciment | 30-60 | 40-50 |
| Portland | | |
| Pouzzolane | 0-50 | 30-40 |
| Granulé de verre gonflé | 5-30 | 10-20 |
| Tissu | 0,5-3 | 0,5-1 |

23. Panneau léger selon l'une quelconque ou plusieurs des revendications précédentes,
**caractérisé en ce que**
la couche centrale (2) contient des adjuvants classiques tels que pouzzolanes, par exemple cendre volante, en particulier cendre volante de houille et/ou sable sidérurgique et/ou microsilices.

24. Panneau léger selon l'une quelconque ou plusieurs des revendications précédentes,
**caractérisé en ce que**
des compositions préférées de couches centrales (2) sont les suivantes :
| Matière première | [% en poids] | |
|---|---|---|
| | | en particulier |
| Pierre de ciment Portland | 20-40 | 25-35 |
| Pouzzolane | 0-40 | 20-30 |
| Granulé d'argile expansée | 30-60 | 40-50 |

25. Panneau léger selon l'une quelconque ou plusieurs des revendications précédentes,
**caractérisé en ce que**
la couche de recouvrement (3a, 3b) présente 5 à 20 % en volume, de préférence 8 à 15 % en volume de pores d'air (11), qui résultent de l'utilisation d'entraîneurs d'air.

26. Panneau léger selon l'une quelconque ou plusieurs des revendications précédentes,
**caractérisé en ce que**
la couche centrale (2) présente 10 à 30 % en volume, de préférence 15 à 25 % en volume de pores d'air (10), qui résultent de l'utilisation d'agents entraîneurs d'air.
